# EUROPÄISCHE PATENTANMELDUNG

(11) **EP 3 098 556 A1**
(43) Veröffentlichungstag der Anmeldung: **30.11.2016**
(21) Anmeldenummer: 16169041.7
(22) Anmeldetag: 10.05.2016
(51) Int. Cl.: F28F 3/02, F01N 5/02, F25B 39/02, F28F 13/00, F28F 13/18, F28D 9/00, F28D 15/04, F28D 21/00, F02M 26/22

(54) **KRAFTFAHRZEUG-WÄRMEÜBERTRAGERSYSTEM**

(30) Priorität: 12.05.2015 DE 102015107442
(71) Anmelder: Benteler Automobiltechnik GmbH, 33102 Paderborn (DE)
(72) Erfinder: Grenz, Julian, 33129 Delbrück (DE); Przybylski, Sven, 33104 Paderborn (DE); Beye, Maximilian, 39108 Magdeburg (DE); Düpmeier, Tobias, 33100 Paderborn (DE)
(74) Vertreter: Griepenstroh, Jörg

(57) **Zusammenfassung**

Die Erfindung betrifft ein Kraftfahrzeug-Wärmeübertragersystem mit einem geschlossenen Kreislauf für ein Arbeitsmedium (AM), wobei ein Verdampfer 1 zur Verdampfung des Arbeitsmediums AM und ferner ein Kondensator 2 zur Kondensierung des dampfförmigen Arbeitsmediums AM vorgesehen ist. Zwischen Kondensator 2 und Verdampfer 1 ist ein Vorratsbehälter 3 für das Arbeitsmedium AM eingegliedert. Flüssiges Arbeitsmedium AM wird vom Vorratsbehälter 3 über eine Zulaufleitung 14 in den Verdampfer 1 geleitet. Zusätzlich sind der Vorratsbehälter 3 und der Verdampfer 1 über eine Ausgleichsleitung 21 verbunden. Durch die Ausgleichsleitung 21 kann Dampf, der sich im Betrieb des Kraftfahrzeug-Wärmeübertragersystem auf der Flüssigseite des Verdampfers 1 bilden kann, entweichen und ein Druckausgleich bewirkt werden.

## Beschreibung

Die Erfindung betrifft ein Kraftfahrzeug-Wärmeübertragersystem gemäß den Merkmalen im Oberbegriff von Anspruch 1.

Die Nutzung von Abwärme bzw. von thermischer Verlustenergie in Kraftfahrzeugen, beispielsweise von thermischer Verlustenergie im Abgas der Verbrennungsmotoren von Kraftfahrzeugen, bietet verschiedene Ansätze, um die Effizienz von Kraftfahrzeugen zu erhöhen. In diesem Zusammenhang bietet die Verwendung der Abwärme zur Beheizung des Fahrgastraums die Möglichkeit, auf zusätzliche Heizmaßnahmen zu verzichten und so den Kraftstoffverbrauch zu reduzieren. Auch kann Abwärme zur Warmlaufbeschleunigung der Antriebsstrangkomponenten eines Kraftfahrzeuges verwendet werden. Hierdurch können mechanische Verlustleistung und damit Motorlast und -verbrauch während der Warmlaufphase verringert werden. Die Rückgewinnung der beim motorischen Verbrennungsprozess entstehenden Abwärme bietet folglich ein großes Einsparpotential für Kraftstoff und kann zur Erhöhung des Fahr- bzw. Nutzkomforts eines Kraftfahrzeuges beitragen.

Durch die EP 0 832 411 B1 bzw. die DE 696 06 296 T2 ist ein Verfahren zum Transport von Flüssigkeiten in einem mikrofluidischen Kreislaufsystem bekannt mit einer Kapillarpumpe zum Transport von Wärme. Im Kreislauf sind mindestens ein Verdampfer sowie ein Kondensator und ein Behälter zur Aufnahme eines wärmeübertragenden Fluids bzw. Arbeitsmediums vorgesehen. Der Verdampfer weist einen Ausgang auf, der über eine Verdampferleitung mit dem Eingang des Kondensators verbunden ist. Ein Ausgang des Kondensators ist mit dem Vorratsbehälter verbunden. Der Verdampfer enthält einen Verdampferkörper mit einem durchlässigen Material, um das Arbeitsmedium durch Wärmeabsorption zu verdampfen und einen kapillaren Pumpdruck im Inneren des Kreislaufs zu erzeugen. Der Vorratsbehälter und der Verdampfer sind thermisch voneinander isoliert und miteinander über eine Leitung verbunden. Hierbei ist der Behälter so beschaffen, dass er auf einer niedrigeren Temperatur als der Verdampfer gehalten wird. Dies soll einen Wärmetausch mit einer minimalen Temperaturdifferenz zwischen der Wärmequelle und dem Kondensator erlauben.

Die US 4,087,047 A oder die DE 25 23 645 A1 ebenso wie die DE 38 06 418 C2 offenbaren Vorschläge, bei denen das Kühlwasser mittels Wärmerohren sogenannten Heat Pipes beschleunigt erwärmt werden soll. Hierbei werden konventionelle Wärmerohre verwendet, wobei der Verdampferbereich des Wärmerohres in Kontakt mit dem Abgas und der Kondensatorteil in Kontakt mit dem Kühlkreislauf des Motors steht. Die Wärmerohre weisen an ihrer Wand eine Kapillarstruktur auf, die das Arbeitsmedium vom Kondensator zurück in die Verdampferzone transportiert.

Weiterhin zählt durch die DE 10 2008 007 726 A1 ein Wärmerohr vom Kreislauftyp eine sogenannte Loop Heat Pipe zum Stand der Technik. Dieses Wärmerohr soll Wärme aus dem Abgas zu einem luftgekühlten Kondensator leiten. Über einen Kondensator wird die in die Fahrerkabine einströmende Luft erwärmt.

Eine Loop Heat Pipe ist ein evakuiertes, mit Arbeitsmedium gefülltes geschlossenes Wärmetransportsystem. Bei der Abgaswärmenutzung mittels Loop Heat Pipes (LHP) werden LHP Verdampfer in die Abgasleitung von Kraftfahrzeugen integriert. Der Verdampfer besteht im Wesentlichen aus einem Gehäuse, einer innenliegenden Kapillarstruktur, einer Dichtung und einem Deckel. Die Dichtung dient zur Aufrechterhaltung einer Druckdifferenz zwischen flüssigen und gasförmigen Arbeitsmedium, die durch Kapillarkräfte innerhalb der Kapillarstruktur erzeugt wird.

Die Verdampfung innerhalb der Kapillarstruktur wird durch die Wärmeleitfähigkeit der meist metallischen Struktur ermöglicht. Gleichzeitig wirkt die Kapillarstruktur als Wärmebrücke zu dem Verdampferteil in dem das Arbeitsmedium flüssig auf die Kapillarstruktur trifft. In diesem Verdampferteil kommt es durch diese Wärmebrückenwirkung zu einer Verdampfung von Arbeitsmedium. Dies führt zum Einen zu einer Reduzierung der Druckdifferenz zwischen dem Flüssigteil des Verdampfers und dem Verdampfungsbereich. Darüber hinaus drückt der Dampf durch die Verbindungsleitung zwischen Vorratsbehälter und Verdampfer, was die Zufuhr von flüssigem Arbeitsmedium behindert und durch ein Aufsteigen von Dampfblasen in den Vorratsbehälter gekennzeichnet ist. Bei hohem Wärmeeintrag kann dieser Effekt so stark sein, dass der Rückfluss nicht ausreicht um ein vollständiges Austrocknen der Kapillarstruktur zu verhindern. In diesem Fall wird der Kreislauf innerhalb der Loop Heat Pipe unterbrochen und es kommt zu einem Erliegen des Wärmetransports zwischen Verdampfer und Kondensator.

Der Erfindung liegt ausgehend vom Stand der Technik die Aufgabe zugrunde, ein Kraftfahrzeug-Wärmeübertragersystem anlagentechnisch zu verbessern sowie in seiner Effizienz zu erhöhen.

Die Lösung dieser Aufgabe besteht nach der Erfindung in einem Kraftfahrzeug-Wärmeübertragersystem gemäß Anspruch 1.

Vorteilhafte Ausgestaltungen und Weiterbildungen des erfindungsgemäßen Kraftfahrzeug-Wärmeübertragersystems sind Gegenstand der abhängigen Ansprüche 2 bis 9.

Das Kraftfahrzeug-Wärmeübertragersystem weist einen geschlossenen Kreislauf für ein Arbeitsmedium auf. In dem Kreislauf ist ein Verdampfer integriert. Der Verdampfer steht mit einer Wärmequelle des Kraftfahrzeuges wärmeübertragend in Kontakt. Besonders vorteilhaft ist der Verdampfer in den Abgasstrom der Brennkraftmaschine des Kraftfahrzeugs integriert. Hierdurch kann die Abwärme des heißen Abgases genutzt werden. Das aus der Brennkraftmaschine des Kraftfahrzeuges abgeführte Abgas wird hierzu ganz oder teilweise durch einen Abgaskanal geleitet. Im Verdampfer wird das Arbeitsmedium verdampft und strömt von dort aus über eine Dampfleitung zu einem im Kraftfahrzeug angeordneten Kondensator. Im Kondensator erfolgt ein Wärmetausch mit einem Verbraucher, wobei das dampfförmige Arbeitsmedium kondensiert und verflüssigt wird. Über eine Rücklaufleitung wird das flüssige Arbeitsmedium in den Vorratsbehälter und von dort aus über die Zulaufleitung in den Verdampfer rückgeführt.

Zum Kraftfahrzeug-Wärmeübertragersystem gehört ein Vorratsbehälter für flüssiges Arbeitsmedium. Dieser dient zur Bevorratung von Arbeitsmedium und Vergleichmäßigung des Medienkreislaufs. Der Vorratsbehälter ist zwischen Kondensator und Verdampfer eingegliedert und mit diesen über Fluidleitungen verbunden. Hierbei steht der Vorratsbehälter und der Verdampfer über eine Zulaufleitung für flüssiges Arbeitsmedium miteinander in Kontakt.

Erfindungsgemäß sind der Vorratsbehälter und der Verdampfer zusätzlich über eine Ausgleichsleitung miteinander verbunden.

Die zusätzliche Ausgleichsleitung zwischen dem Flüssigteil bzw. der Flüssigseite des Verdampfers und dem Vorratsbehälter unterstützt die Dampfableitung aus der Flüssigseite des Verdampfers bzw. unterstützt einen Druckausgleich vom Verdampfer hin zum Vorratsbehälter.

Vorzugsweise umfasst der Verdampfer zumindest eine Verdampferkassette, wobei in der Verdampferkassette eine Kapillarstruktur angeordnet ist. In der Verdampferkassette sind durch die Kapillarstruktur eine Flüssigseite und eine Dampfseite voneinander getrennt. Weiterhin weist eine Verdampferkassette einen Dampfsammler auf. Im Dampfsammler wird das dampfförmige Arbeitsmedium gesammelt und von dort aus dem Kondensator zugeleitet.

Die Kapillarstruktur ist vorzugsweise durch einen porösen Plattenkörper gebildet. Vorzugsweise besteht die Kapillarstruktur aus einem gesinterten Werkstoff. Insbesondere ist die Kapillarstruktur auf metallischer Basis ausgeführt.

Ein besonders vorteilhafter Aspekt der Erfindung sieht vor, dass die Ausgleichsleitung mit der Flüssigseite der Verdampferkassette in Verbindung steht.

Im Rahmen der Erfindung ist vorgesehen, dass die Ausgleichsleitung über einen Ausgleichsanschluss und die Zulaufleitung über einen Zulaufanschluss an den Verdampfer angeschlossen sind. Hierbei ist der Ausgleichsanschluss insbesondere oberhalb des Zulaufanschlusses positioniert. Auf diese Weise liegt der Ausgleichsanschluss im Kraftfahrzeug-Wärmeübertragersystem örtlich höher als der Zulaufanschluss. In Folge dessen strömt etwaiger Dampf, der sich auf der Flüssigseite des Wärmetauschers bildet, durch den natürlichen Auftrieb in Richtung zum Ausgleichsanschluss.

Flüssiges Arbeitsmedium wird über die Zulaufleitung zwischen Vorratsbehälter und Verdampfer in den unteren Teil des Verdampfers geleitet, wohingegen der Dampf über die Ausgleichsleitung aus dem oberen Teil des Verdampfers abgeleitet wird. Durch diese Anordnung drückt das flüssige Arbeitsmedium den auf der Flüssigseite entstehenden Dampf nach oben, von wo der Dampf in Richtung Vorratsbehälter über die Ausgleichsleitung abgeleitet wird. Hierdurch entsteht eine Zwangsrichtung für den Dampf. Ein Aufsteigen von Dampfblasen durch die Zulaufleitung zwischen Vorratsbehälter und Verdampfer wird verhindert. Besonders vorteilhaft wirkt sich hierbei aus, dass auf der Flüssigseite keine großen Dampfblasen bzw. Dampfbereiche entstehen. Solche schädlichen Bereiche könnten zu einer Überhitzung des Arbeitsmediums und im kritischen Fall zu einer Schädigung führen, da dort flüssiges Arbeitsmedium mit der entsprechenden Kühlwirkung fehlt.

Eine Verdampferkassette ist vorzugsweise rechteckig plattenförmig konfiguriert. In einfacher Bauweise besteht das Gehäuse einer Verdampferkassette aus einer Gehäuseschale, die durch einen Deckel verschlossen ist. Im Deckel sind die notwendigen Anschlüsse sowohl für das Arbeitsmedium als auch für die Ausgleichsleitung integriert. Im Innenraum der Verdampferkassette ist die Kapillarstruktur eingegliedert, welche ebenfalls rechteckig plattenförmig konfiguriert ist. Diese Ausgestaltung ist fertigungstechnisch vorteilhaft. Gleiches gilt für den benötigten Bauraum sowie für das Gewicht des Verdampfers. In der Kapillarstruktur sind Dampfrillen und/oder Dampfkanäle ausgebildet. Besonders vorteilhaft sind die Dampfrillen bzw. Dampfkanäle auf der Dampfseite der Kapillarstruktur vorgesehen. Alternativ oder zusätzlich können auch im Gehäuse einer Verdampferkassette, und zwar auf der Dampfseite im Boden des Gehäuses, Dampfrillen oder Dampfkanäle ausgebildet sein. Solche Dampfrillen bzw. Dampfkanäle können durch Sicken im Boden des Gehäuses hergestellt sein. Selbstverständlich ist auch eine spanabhebende Fertigung von Dampfrillen bzw. Dampfkanälen möglich.

Eine besonders vorteilhafte Ausgestaltung sieht vor, dass der Verdampfer zumindest zwei Verdampferkassetten umfasst, wobei zwischen den Verdampferkassetten ein Kanal zur Führung eines heißen Fluids, insbesondere ein Abgaskanal, ausgebildet ist. Der Wärmeübertrag vom heißen Fluid, insbesondere vom Abgas in den Verdampfer erfolgt über Wärmetauscherelemente, beispielsweise Wärmetauscherfinnen. Durch den Wärmeeintrag verdampft das Arbeitsmedium innerhalb der Kapillarstruktur und wird durch Dampfrillen zu einem Dampfsammler und anschließend durch eine Dampfleitung zu einem Kondensator geleitet. Im Kondensator verflüssigt das Arbeitsmedium durch Wärmeabgabe und strömt über eine Rücklaufleitung in den Vorratsbehälter. Vom Vorratsbehälter strömt das flüssige Arbeitsmedium über die Zulaufleitung zurück zum Verdampfer.

Im Kondensator des erfindungsgemäßen Kraftfahrzeug-Wärmeübertragersystems wird das vom Verdampfer kommende dampfförmige Arbeitsmedium kondensiert. Hierzu ist der Kondensator in einen Kühlfluidstrom eingegliedert und wird mit Kühlfluid beaufschlagt, wobei der Kondensator von einem Kühlfluid angeströmt bzw. umströmt oder durchströmt wird. Bei einer für die Praxis vorteilhaften Ausgestaltung des Kraftfahrzeug-Wärmeübertragersystems kann der Vorratsbehälter in dem Kühlfluidstrom angeordnet sein und wird durch den Kühlfluidstrom gekühlt. Diese Maßnahme trägt dazu bei, ein niedriges Druckniveau im Kreislauf zu halten.

Die Erfindung ist nachfolgend anhand von in den Zeichnungen dargestellten Ausführungsbeispielen näher beschrieben. Es zeigen:
- Figur 1: technisch vereinfacht und schematisiert einen Längsschnitt durch eine Verdampferkassette eines Wärmetauschers des erfindungsgemäßen Kraftfahrzeug-Wärmeübertragersystems;
- Figur 2: die Verdampferkassette entsprechend der Figur 1 mit der Darstellung von Fluidströmungen und
- Figur 3: technisch schematisiert ein erfindungsgemäßes Kraftfahrzeug-Wärmeübertragersystem mit der Darstellung der wesentlichen Systemkomponenten.

Ein Kraftfahrzeug-Wärmeübertragersystem weist einen geschlossenen Kreislauf für ein Arbeitsmedium AM auf und umfasst einen Verdampfer 1 zur Verdampfung des Arbeitsmediums AM sowie einen Kondensator 2 zur Kondensierung des dampfförmigen Arbeitsmediums AM. Bei dem Arbeitsmedium AM handelt es sich insbesondere um Ethanol. Zwischen Kondensator 2 und Verdampfer 1 ist ein Vorratsbehälter 3 vorgesehen. Der Verdampfer 1 ist in den Abgasstrom AG einer Brennkraftmaschine eines Kraftfahrzeugs integriert.

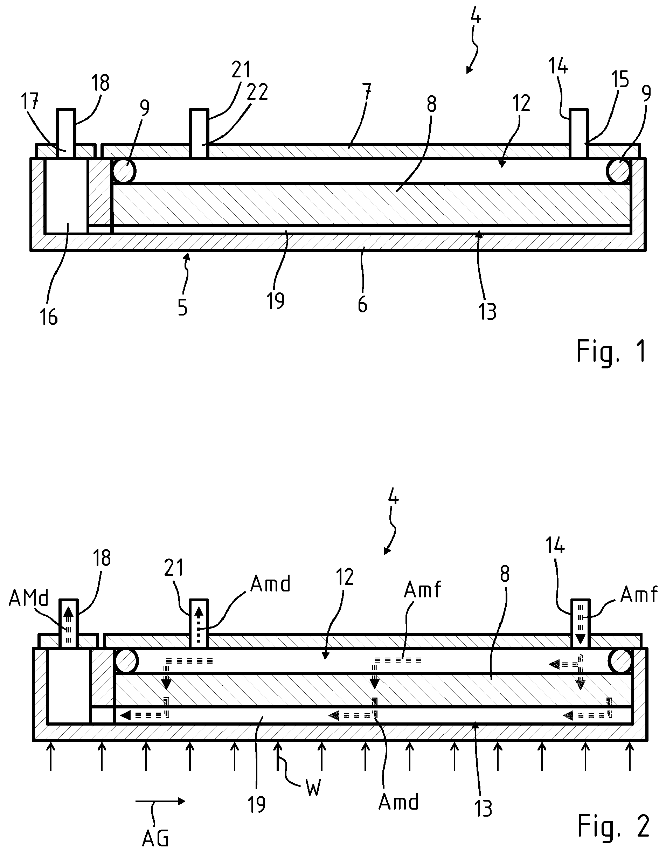

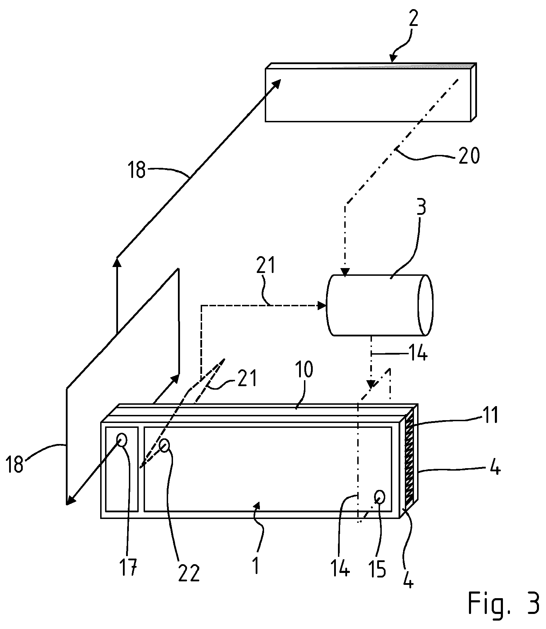

Der Verdampfer 1 umfasst in dem Ausführungsbeispiel gemäß Figur 3 insgesamt zwei Verdampferkassetten 4. Eine Verdampferkassette 4 ist in den Figuren 1 und 2 technisch vereinfacht in einem Längsschnitt dargestellt.

Die Verdampferkassetten 4 sind rechteckig konfiguriert mit einem Gehäuse 5 aus einer Gehäuseschale 6 und einem Deckel 7. Im Gehäuse 5 der Verdampferkassetten 4 ist jeweils eine Kapillarstruktur 8 angeordnet. Die Kapillarstruktur 8 ist durch einen porösen Plattenkörper aus einem gesinterten Material gebildet, insbesondere auf metallischer Basis. Die Kapillarstruktur 8 ist im Gehäuse 5 lageorientiert und über Abstandshalter 9 gegenüber dem Deckel 7 abgedichtet. Die Abstandshalter 9 sind durch Dichtungen gebildet.

Die beiden Verdampferkassetten 4 sind parallel zueinander angeordnet und vertikal orientiert. Zwischen den Verdampferkassetten 4 ist ein Abgaskanal 10 für heißes Abgas AG ausgebildet. Das Abgas AG stammt aus dem Abgasstrom der Brennkraftmaschine des Kraftfahrzeuges. Hierbei kann es sich auch um einen vom Abgasstrom abgezweigten Teilstrom handeln. Im Abgaskanal 10 sind Wärmeübertragerelemente 11 zur Vergrößerung der Wärmeübergangsfläche vorgesehen. Bei den Wärmeübertragerelementen 11 handelt es sich um in Längsrichtung des Verdampfers 1 orientierte Blechlamellen, sogenannte Wärmetauscherfinnen. Das Abgas AG strömt durch den Abgaskanal 10. Hierbei wird Wärme vom Abgas AG auf die Verdampferkassetten 4 und das Arbeitsmedium AM übertragen. Der Wärmestrom ist in der Figur 2 durch die Pfeile W verdeutlicht. In der Figur 2 ist ferner die Fluidströmung von flüssigem Arbeitsmedium AM und dampfförmigen Arbeitsmedium AM dargestellt. Zur Kennzeichnung des Aggregatzustandes des Arbeitsmediums AM ist flüssiges Arbeitsmedium mit AMf und dampfförmiges Arbeitsmedium AMd gekennzeichnet.

In einer Verdampferkassette 4 ist durch die Kapillarstruktur 8 eine Flüssigseite 12 und eine Dampfseite 13 getrennt. Auf der Flüssigseite 12 ist eine Zulaufleitung 14 über einen Zulaufanschluss 15 zur Zuführung von flüssigem Arbeitsmedium AMf in die Verdampferkassette 4 vorgesehen. Jede Verdampferkassette 4 weist ferner einen Dampfsammler 16 auf. In dem Dampfsammler 16 wird das jeweils in einer Verdampferkassette 4 verdampfte Arbeitsmedium AMd gesammelt und über einen Dampfauslass 17 und eine Dampfleitung 18 im Kreislauf des Kraftfahrzeug-Wärmeübertragersystems zum Kondensator 2 geleitet.

Das flüssige Arbeitsmedium AMf verteilt sich auf der Flüssigseite 12 über die Fläche der Kapillarstruktur 8. Durch Wärmeübertragung von dem durch den Abgaskanal 10 strömenden heißen Abgas AG wird das Arbeitsmedium AM in den Verdampferkassetten 4 verdampft. Das Arbeitsmedium AM tritt von der Flüssigseite 12 durch die Kapillarstruktur 8 hindurch und geht vom flüssigen in den dampfförmigen Zustand über. Die Phasengrenze zwischen Flüssigkeit und Dampf während des Betriebs des Verdampfers 1 verläuft in der Kapillarstruktur 8, wodurch ein Kapillardruck aufgebaut wird, der den Kreislauf des Arbeitsmediums AM bedingt und aufrechterhält. Auf der Dampfseite 13 strömt das dampfförmige Arbeitsmedium AMd durch Dampfrillen 19 bis es in den Dampfsammler 16 gelangt. Das dampfförmige Arbeitsmedium AMd wird aus den Dampfsammlern 16 über den Dampfauslass 17 und die Dampfleitung 18 abgeführt.

Das im Kondensator 2 durch Wärmeabgabe an einen Verbraucher verflüssigte Arbeitsmedium AMf wird über eine Rücklaufleitung 20 in den Vorratsbehälter 3 geleitet. Vom Vorratsbehälter 3 gelangt das flüssige Arbeitsmedium AMf über die Zulaufleitung 14 zum Verdampfer 1 und wird in die Verdampferkassetten 4 eingeleitet.

Zwischen Verdampfer 1 und Vorratsbehälter 3 ist zusätzlich eine Ausgleichsleitung 21 vorgesehen, die den Vorratsbehälter 3 und den Verdampfer 1 verbinden. Über die Ausgleichsleitung 21 erfolgt ein Druckausgleich zwischen Verdampfer 1 und Vorratsbehälter 3. Hierdurch können insbesondere Dampfblasen, die sich auf der Flüssigseite 12 des Verdampfers 1 bilden, entweichen.

Die Figur 3 zeigt die Fluidführung von flüssigem Arbeitsmedium AMf und dampfförmigem Arbeitsmedium AM im Kreislauf des Kraftfahrzeug-Wärmeübertragersystems. Flüssiges Arbeitsmedium AM wird im Vorratsbehälter 3 bevorratet und über jeweils eine Zulaufleitung 14 zum Verdampfer 1 geleitet. Zur Versorgung beider Verdampferkassetten 4 wird die Zulaufleitung 14 in zwei Leitungsstränge geteilt. Über den Zulaufanschluss 15 gelangt das flüssige Arbeitsmedium AMf jeweils auf die Flüssigseite 12 der Verdampferkassetten 4. Verdampftes bzw. dampfförmiges Arbeitsmediums AMd tritt über die Dampfauslässe 17 aus den Verdampferkassetten 4 aus und wird über die Dampfleitung 18 zum Kondensator 2 geleitet.

Die Ausgleichsleitung 21 ist über einen Ausgleichsanschluss 22 ebenfalls mit der Flüssigseite 12 einer Verdampferkassette 4 verbunden. Man erkennt, dass der Ausgleichsanschluss 22 oberhalb des Zulaufanschlusses 15 angeordnet ist. Der Ausgleichsanschluss 22 liegt folglich vertikal über dem Zulaufanschluss 15. Demzufolge wird das flüssige Arbeitsmedium AMf über die Zulaufleitung 14 in den unteren Teil des Verdampfers 1 bzw. der Verdampferkassette 4 geleitet und wie zuvor beschrieben verdampft, wobei das Arbeitsmedium AM hierbei durch die Kapillarstruktur 8 von der Flüssigseite 12 auf die Dampfseite 13 übertritt. Sofern es auf der Flüssigseite 12 durch Wärmebrückenbildung zu einer Verdampfung von Arbeitsmedium AM kommt, kann dieser über die Ausgleichsleitung 21 aus dem oberen Teil des Verdampfers 1 bzw. der Verdampferkassetten 4 abgeleitet werden. Das flüssige Arbeitsmedium AMf drückt den auf der Flüssigseite 12 entstehenden Dampf nach oben, wo er über den Ausgleichsanschluss 21 abgeleitet und durch die Ausgleichsleitung 21 in den Vorratsbehälter 3 überführt wird. Die Bildung von Dampfblasen oder Dampfbereichen auf der Flüssigseite 12 einer Verdampferkassette 4 kann so verhindert bzw. dieser entgegengewirkt werden.

### Bezugszeichen:

- 1 -: Verdampfer
- 2 -: Kondensator
- 3 -: Vorratsbehälter
- 4 -: Verdampferkassette
- 5 -: Gehäuse
- 6 -: Gehäuseschale
- 7 -: Deckel
- 8 -: Kapillarstruktur
- 9 -: Abstandshalter
- 10 -: Abgaskanal
- 11 -: Wärmeübertragerelement
- 12 -: Flüssigseite
- 13 -: Dampfseite
- 14 -: Zulaufleitung
- 15 -: Zulaufanschluss
- 16 -: Dampfsammler
- 17 -: Dampfauslass
- 18 -: Dampfleitung
- 19 -: Dampfrillen
- 20 -: Rücklaufleitung
- 21 -: Ausgleichsleitung
- 22 -: Ausgleichsanschluss

- AM -: Arbeitsmedium
- AMf -: flüssiges Arbeitsmedium
- AMd -: dampfförmiges Arbeitsmedium
- AG -: Abgas
- W -: Pfeil

## Patentansprüche

1. Kraftfahrzeug-Wärmeübertragersystem mit einem geschlossenen Kreislauf für ein Arbeitsmedium, wobei ein Verdampfer (1) zur Verdampfung des Arbeitsmediums sowie ein Kondensator (2) zur Kondensierung des dampfförmigen Arbeitsmedium vorgesehen ist und zwischen Kondensator (2) und Verdampfer (1) ein Vorratsbehälter (3) für flüssiges Arbeitsmedium vorgesehen ist, wobei der Vorratsbehälter (3) und der Verdampfer (1) über eine Zulaufleitung (14) für flüssiges Arbeitsmedium miteinander verbunden sind, **dadurch gekennzeichnet, dass** der Vorratsbehälter (3) und der Verdampfer (1) zusätzlich über eine Ausgleichsleitung (21) miteinander verbunden sind.

2. Kraftfahrzeug-Wärmeübertragersystem nach Anspruch 1, **dadurch gekennzeichnet, dass** der Verdampfer (1) zumindest eine Verdampferkassette (4) umfasst, wobei in der Verdampferkassette (4) eine Kapillarstruktur (8) angeordnet ist und die Verdampferkassette (4) eine Flüssigseite (12) und eine Dampfseite (13) sowie einen Dampfsammler (16) aufweist.

3. Kraftfahrzeug-Wärmeübertragersystem nach Anspruch 2, **dadurch gekennzeichnet, dass** die Ausgleichsleitung (21) mit der Flüssigseite (12) der Verdampferkassette (4) in Verbindung steht.

4. Kraftfahrzeug-Wärmeübertragersystem nach einem der Ansprüche 1 bis 3, **dadurch gekennzeichnet, dass** die Ausgleichsleitung (21) über einen Ausgleichsanschluss (22) und die Zulaufleitung (14) über einen Zulaufanschluss (15) an den Verdampfer (1) angeschlossen sind, wobei der Ausgleichsanschluss (22) oberhalb des Zulaufanschlusses (15) positioniert ist.

5. Kraftfahrzeug-Wärmeübertragersystem nach einem der Ansprüche 1 bis 4, **dadurch gekennzeichnet, dass** die Kapillarstruktur (8) durch einen porösen Plattenkörper aus einem gesinterten Material gebildet ist.

6. Kraftfahrzeug-Wärmeübertragersystem nach einem der Ansprüche 1 bis 5, **dadurch gekennzeichnet, dass** die Kapillarstruktur (8) auf der Dampfseite (13) Dampfrillen (19) und/oder Dampfkanäle aufweist.

7. Kraftfahrzeug-Wärmeübertragersystem nach einem der Ansprüche 1 bis 6, **dadurch gekennzeichnet, dass** der Verdampfer (1) zumindest zwei Verdampferkassetten (4) umfasst, wobei zwischen den Verdampferkassetten (4) ein Kanal (10), insbesondere ein Abgaskanal, ausgebildet ist.

8. Kraftfahrzeug-Wärmeübertragersystem nach Anspruch 7, **dadurch gekennzeichnet, dass** im Kanal (10) Wärmeübertragerelemente (11) vorgesehen sind.

9. Kraftfahrzeug-Wärmeübertragersystem nach einem der Ansprüche 1 bis 8, **dadurch gekennzeichnet, dass** auf der Dampfseite (13) einer Verdampferkassette (4) Dampfrillen und/oder Dampfkanäle im Boden des Gehäuses (5) der Verdampferkassette (4) vorgesehen sind.
